Europäisches Patentamt

European Patent Office

Office européen des brevets

(19)

(11) Veröffentlichungsnummer: 0 215 277
B1

(12) EUROPÄISCHE PATENTSCHRIFT

(45) Veröffentlichungstag der Patentschrift: 23.05.90

(51) Int. Cl.⁵: G 01 N 11/14

(21) Anmeldenummer: 86110957.7

(22) Anmeldetag: 08.08.86

(54) Rotationsviskosimeter.

(30) Priorität: 13.08.85 CH 3475/85

(43) Veröffentlichungstag der Anmeldung:
25.03.87 Patentblatt 87/13

(45) Bekanntmachung des Hinweises auf die
Patenterteilung:
23.05.90 Patentblatt 90/21

(84) Benannte Vertragsstaaten:
CH DE FR GB IT LI NL SE

(56) Entgegenhaltungen:
FR-A-1 448 141
FR-A-2 160 093
US-A-3 470 732
US-A-4 045 999

(73) Patentinhaber: CONTRAVES AG
Schaffhauserstrasse 580
CH-8052 Zürich (CH)

(72) Erfinder: Zemp, Georg
Friedheimstrasse 26
CH-8057 Zürich (CH)

Courier Press, Leamington Spa, England.

EP 0 215 277 B1

## Beschreibung

Die Erfindung bezieht sich auf einen Rotationsviskosimeter mit einem Messbecher, einem in dem Messbecher frei hängend angeordneten Messkörper, dessen Aufhängung in mindestens ein Lager um eine vertikale Achse drehbar ist, einem mit dem Messbecher oder dem Messkörper in Verbindung stehenden Drehantrieb und einer Einrichtung zur Messung des an der Aufhängung wirkenden Drehmoments.

Rotationsviskosimeter bzw. Rotationsrheometer dieser Art sind in verschiedenen Ausführungsformen bekannt, wie beispielsweise durch die CH-PS 474 055. Das Messprinzip beruht auf der Messung des Drehmomentes, das von dem zu messenden Medium aufgenommen wird, wenn eine relative Drehbewegung zwischen dem in das Medium eintauchenden Messkörper und dem das Medium aufnehmenden Messbecher erfolgt.

Der Erfindung liegt die Aufgabe zugrunde, die Messgenauigkeit eines Rotationsviskosimeters der genannten Art durch Verringerung der Lagerreibung des oder der Radiallager zu erhöhen und die Gefahr einer Beschädigung eines solchen Radiallagers, z.B. bei der Herstellung des Kontakts zwischen dem Messkörper und dem zu messenden Medium, zu beseitigen. Diese Aufgabe wird gelöst aufgrund der Merkmale des Patentanspruchs 1. Vorteilhafte Ausgestaltungen der Erfindung sind Gegenstand der abhängigen Ansprüche.

Im folgenden wird die Erfindung anhand eines in den Zeichnungen dargestellten Ausführungsbeispieles näher erläutert. Es zeigt:

Fig. 1 einen Axialschnitt durch ein Rotationsviskosimeter in vereinfachter Darstellung, und

Fig. 2 eine vergrösserte Schnittdarstellung durch ein in dem Rotationsviskosimeter nach Fig. 1 vorgesehenes Radiallager.

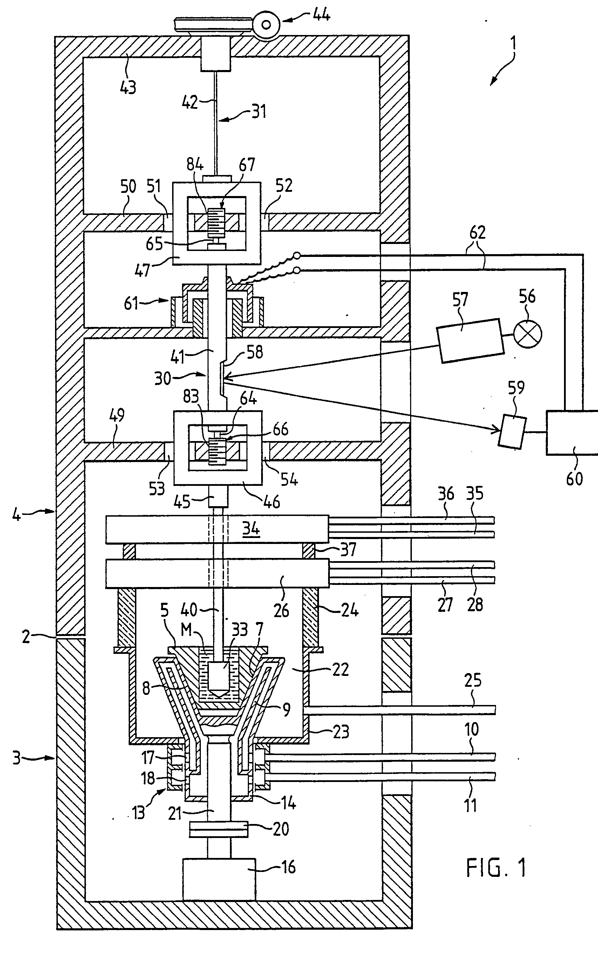

Das fliessfähige oder rheologische Medium M, dessen Viskosität bzw. rheologische Eigenschaft zu messen ist, wird nach Oeffnen des in Fig. 1 dargestellten Viskosimeters 1 entlang der Trennstelle 2 zwischen den übereinander angeordneten Gehäuseteilen 3, 4 in einen temperierten Messbecher 5 eingefüllt. Der Messbecher 5 ist auswechselbar in den konischen Aufnahmeraum einer Becherfassung 7 eingesetzt, so dass seine konische Aussenfläche 8 einen festen, wärmeübertragenden Sitz in der Becherfassung 7 hat. Das zu messende Medium M kann somit bereits vorher in einen separaten Messbecher eingefüllt werden, so dass für ein Viskosimeter zweckmässig mehrere gegeneinander auswechselbare Messbecher 5 vorhanden sind. Für die Temperierung ist die Becherfassung 7 doppelwandig ausgeführt und schliesst in ihrer Wand eine Trennwand 9 für die Führung einer Temperierflüssigkeit ein. Die Zu- und Ableitung der Temperierflüssigkeit erfolgt über einen, mit entsprechenden Anschlussleitungen 10, 11 versehenen Verteilkopf 13, der einen unteren kreiszylindrischen Teil 14 der Becherfassung 7 abgedichtet umschliesst, so dass sich die Becherfassung 7 in dem Verteilkopf 13, angetrieben durch einen Motor 16, drehen kann.

Die Strömungsverbindung vom Verteilkopf 13 in die Becherfassung hinein erfolgt über eine Anzahl von Oeffnungen 17, 18 die in Umfangsrichtung verteilt in dem Becherfassungsteil 14 vorgesehen sind. Eine Kupplung 20 zwischen einem Wellenschaft 21 der Becherfassung 7 und dem Motor 16 ist als Temperatursperre ausgebildet und weist somit ein wärmeisolierendes Material auf.

Die Teile 5 und 7 sind von einem mit einem Messraum 22 versehenen Innengehäuse 23 umschlossen, dessen oberer Teil 24 aus Glas besteht. Eine in das Innengehäuse 23 mündende Schutzgasleitung 25 ermöglicht, das Medium M unter Schutzgas zu halten, während seine Viskosität bzw. rheologischen Eigenschaften gemessen werden. Nach oben ist der Messraum 22 durch eine Deckplatte 26 verschlossen, die in nicht näher dargestellter Weise von einer Temperierflüssigkeit durchströmt wird, um sie auf die gleiche Temperatur zu bringen, wie an der Becherfassung 7 vorhanden ist. Für die Temperierung der Deckplatte 26 sind Anschlussleitungen 27, 28 seitlich durch die Wand des oberen Gehäuseteiles 4 geführt. Damit die Wärme der temperierten Deckplatte 26 nicht auf Teile einer Einrichtung 30 zur Messung des Drehmoments übertragen wird, das an einer Aufhängung 31 eines in das Medium M eintauchenden Messkörpers 33 wirkt, befindet sich mit Abstand oberhalb der Deckplatte 26 eine Abschirmplatte 34, die mit Anschlussleitungen 35, 36 für eine Temperierflüssigkeit versehen ist, mittels welcher die Abschirmplatte 34 annähernd auf Raumtemperatur gehalten wird. Der Abstand zwischen der Deckplatte 26 und der Abschirmplatte 34 ist durch einen zwischengelegten Ring 37 aus Isoliermaterial bestimmt.

Die Aufhängung 31 des Messkörpers 33 erstreckt sich über einen Messkörperschaft 40, der berührungsfrei durch die Deckplatte 26 und Abschirmplatte 34 geführt ist. Eine Kupplung 45, eine Messachse 41 und einen Torsionsdraht 42 bilden eine Wirkverbindung zu einem in der oberen Abschlusswand 43 des oberen Gehäuseteiles 4 gelagerten Justierrad 44, durch das von Hand die Nullposition der Einrichtung 30 zur Messung des Drehmomentes einstellbar ist. Die Messachse 41 bildet mit je einem an ihren Enden vorgesehenen Rahmen 46, 47 eine starre Einheit, die in sich torsionssteif an dem Torsionsdraht 42 aufgehängt ist. Damit sich diese Hängerahmen 46, 47 durch die horizontalen Gehäusezwischenwände 49, 50 hindurcherstrecken können, befinden sich in diesen Oeffnungen 51, 52 bzw. 53, 54, deren Grösse ausreichend bemessen ist, so dass sich diese Hängerahmen 46, 47 mit der Messachse um einen dem Messbereich entsprechenden Winkel verdrehen können.

Entsprechend der Viskosität des Mediums M verursacht die Drehung des das Medium beinhaltenden Messbechers 5 an dem in das Medium M eingetauchten Messkörper 33 ein Drehmoment, welches ein Mass für diese Viskosität bzw. das rheologische Verhalten des Mediums M ist. Zur Messung dieses Drehmoments wird ein durch die CH-PS 593 489 an sich bekanntes Kompensationssystem verwendet, welches eine ortsfeste Lichtquelle 56, eine Optik 57, einen an der verdrehbaren Messachse 41 angeordneten Spiegel 5B, einen photoelektrischen Sensor 59, einen Verstärker 60 und einen Drehmomentmotor 61 umfasst. Der dem Drehmomentmotor 61 über elektrische Leitungen 62 zugeführte Strom wird durch den Sensor 59 derart gesteuert, dass ein Gleichgewicht zwischen dem Drehmoment am Messkörper 33 bzw. an der Messachse 41 und am Drehmomentmotor 61 vorhanden ist. Der für die Herstellung dieses Gleichgewichts am Drehmomentmotor 61 benötigte Strom ist ein Mass für das Drehmoment, bzw. für die Viskosität des Mediums M. Die durch die Richtkraft des Torsionsdrahtes 42 und die flexiblen elektrischen Leitungen 62 hervorgerufenen federmechanischen Einflüsse werden durch Eichung der Messeinrichtung kompensiert.

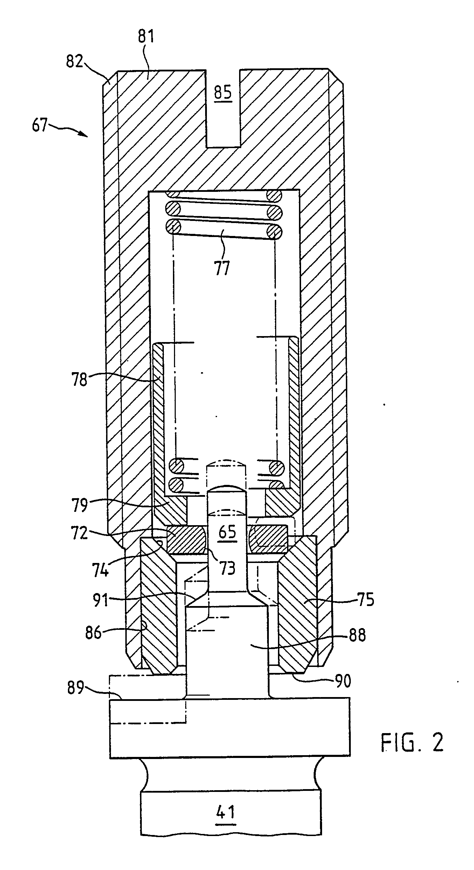

Zur Erhöhung der Richtungsstabilität der Messachse 41, die für die Messgenauigkeit von Bedeutung ist, und um das Zentrieren des Messkörpers 33 frei hängend im Messbecher 5 zu erleichtern, sind die beiden Endzapfen 64, 65 der Messachse 41 in einem Radiallager 66,67 gelagert, das an der Zwischenwand 49, bzw. 50 des oberen Gehäuseteils 4 angeordnet ist. Die Ausführung eines dieser spiegelsymmetrisch zueinander angeordneten Radiallager 66, 67 ist in Fig. 2 näher dargestellt und wird nachstehend näher beschrieben.

Für eine besonders geringe Lagerreibung und damit eine durch Lagerreibung praktisch unbeeinflusste Drehmomentmessung sind die Endzapfen 64, 65 je in einem Lagerring 72 aus Saphir, Rubin oder einem vergleichbaren harten Material gelagert, dessen innere Lagerfläche 73 einen bogenförmigen Axialquerschnitt hat.

Eine Beschädigung oder zu grosse einseitige Lagerbelastung an dem Lagerring 72 wird durch seine äussere Abstützung an einer konischen Innenfläche 74 einer Lagerringfassung 75 und seinen federelastischen Andruck gegen diese Innenfläche 74 verhindert. Der Lagerring 72 und damit auch der in ihm gelagerte Endzapfen 65 der Messachse 41 sind in der Lagerringfassung 75 zentriert. Der federelastische Andruck des Lagerringes 72 erfolgt durch eine gleichachsig zu dem Endzapfen 65 angeordnete Schraubenfeder 77, die von einer hülsenartigen Federfassung 78 über einen Teil ihrer Länge umgeben und dadurch geführt ist. Die Federfassung 78 liegt mit dem Bodenteil 79 an der einen, der Messachse 41 abgewandten Seite des Lagerringes 72 an. Die Federbewegung der Feder 77 mit der Federfassung 78 ergibt sich durch deren verschiebbaren Einschluss in einem Lagergehäuse 81, das mit seinem Aussengewinde 82, wie in Fig. 1 dargestellt, in eine Gewindebohrung 83, 84 der Gehäusezwischenwand 49 bzw. 50 eingeschraubt ist.

Zum Einschrauben des Lagers 67 bzw. 66 in die Gehäusezwischenwand 49 bzw. 50 ist für ein Werkzeug an dem einen Ende des Lagergehäuses 81 ein Schlitz 85 vorgesehen.

Die die Rückstellkraft der Feder 77 über den Lagerring 72 aufnehmende Lagerringfassung 75 ist in einer Oeffnung B6 des Lagergehäuses 81 angeordnet. Die Lagerringfassung 75 umschliesst mit einem die Zentrierbewegung des Endzapfens 65 in dem Radiallager 67 zulassenden Radialspiel einen im Durchmesser grösseren Teil 88 des Endzapfens der Messachse 41 und verhindert somit, dass der Endzapfen 65 den Lagerring 72 aus der konischen Innenfläche 74 der Lagerringfassung 75 herausdrücken kann, wenn z.B. beim Einsetzen des Messkörpers 33 in den Messbecher 5 auf den Messkörper eine zu grosse seitlich, d.h. radial wirkende Kraft ausgeübt wird.

Weiterhin verhindert eine an der Messachse 41 angeformte Schulter 89 dass auf den Lagerring 72 in axialer Richtung eine Schubkraft einwirken kann. Dies wird im wesentlichen dadurch erreicht, dass der Abstand der Schulter 89 vom zugewandten Ende 90 der Lagerringfassung 75 kleiner als der Abstand zwischen einer Schulter 91 zwischen dem grösseren und kleineren Teilstück des abgestuften Endzapfens 65 ausgebildet ist.

Die radialen und axialen Grenzpositionen bzw. Anschlagpositionen des jeweiligen Endzapfens 64 bzw. 65 der Messachse 41 an der Lagerringfassung 75 sind in Fig. 2 durch Strichlinien angedeutet.

**Patentansprüche**

1. Rotationsviskosimeter (1) mit einem Messbecher (5), einem in dem Messbecher (5) frei hängend angeordneten Messkörper (33), dessen Aufhängung (31) in mindestens einem Lager um eine vertikale Achse drehbar ist, einem mit dem Messbecher (5) oder dem Messkörper (33) in Verbindung stehenden Drehantrieb (16) und einer Einrichtung (30) zur Messung des an der Aufhängung wirkenden Drehmoments mit einer im genannten Lager zentrierten Messachse (41), dadurch gekennzeichnet, dass das Lager als Radiallager ausgebildet ist, wobei die Messachse (41) einen Lagerzapfen mit zwei Abschnitten von unterschiedlichem Durchmesser aufweist und dass das Lager eine Lagerringfassung (75) von grösserem Durchmesser als der dickere Teil des Lagerzapfens (88) sowie eine entgegen der Kraft mindestens einer vorgespannten Feder (77) verschiebbare Führung (73) vom Durchmesser des schlankeren Teils des Lagerzapfens (65) enthält.

2. Rotationsviskosimeter nach Anspruch 1, wobei der Drehantrieb (16) mit dem Messbecher (5) wirkverbunden ist und ein mit der Aufhängung (31) wirkverbundener Drehmomentmotor (61) die Aufhängung (31) entgegen dem auf den Messkörper (33) wirkenden Drehmoment in einer Gleichgewichtslage hält und die Gleichgewichtslage an der Messachse (41) optoelektronisch erfasst wird.

3. Rotationsviskosimeter nach einem der vorstehenden Ansprüche, wobei das Radiallager (66, 67) einen Lagerring (72), der die Führung (73) für den schlankeren Teil des Lagerzapfens (65) bildet, aufweist, dessen Umfang an einer konischen Innenfläche (74) einer Lagerringfassung (75) anliegt und durch die Feder (77) gegen diese konische Innenfläche (74) gedrückt ist.

4. Rotationsviskosimeter nach Anspruch 3, wobei der dickere Teil des Lagerzapfens (88) von der Lagerringfassung (75) mit axialem und radialem Spiel umschlossen ist, welches Spiel das Mass der radialen Verschiebbarkeit des Lagerringes (72) und das Mass der axialen Beweglichkeit des von dem Lagerring (72) umschlossenen schlankeren Teils des Lagerzapfens (65) bestimmt.

5. Rotationsviskosimeter nach Anspruch 3 oder 4, wobei der Lagerring (72) aus Saphir, Rubin oder einem vergleichbaren harten Material besteht.

6. Rotationsviskosimeter nach einem der Ansprüche 1 bis 5, wobei das Gehäuse (4) des Viskosimeters (1) mindestens zwei im Abstand zueinander angeordnet, horizontale Zwischenwände (49, 50) aufweist, in denen die Radiallager (66, 67) befestigt sind.

**Revendications**

1. Viscosimètre rotatif (1) comportant une coupelle de mesure (5) dans laquelle est suspendu librement un organe de mesure (33) dont la suspension (31) peut tourner sur un axe vertical dans au moins un palier, un moyen d'entraînement en rotation (16) coopérant avec la coupelle (5) ou l'organe de mesure (33) et une installation (30) pour mesurer le couple agissant sur la suspension avec un axe de mesure (41) centré dans le palier, viscosimètre caractérisé en ce que le palier est un palier radial et l'axe de mesure (41) comprend un bouchon de palier à deux segments de diamètres différents et le palier présente une garniture de bague de palier (75) de diamètre plus grand que la partie la plus épaisse du bouchon de palier (88) ainsi qu'un moyen de guidage (73) ayant le diamètre de la partie la plus mince du bouchon de palier (65) et qui peut coulisser contre la force d'au moins un ressort précontraint (77).

2. Viscosimètre rotatif selon la revendication 1, caractérisé en ce que le moyen d'entraînement en rotation (16) coopère avec la coupelle de mesure (5) et un moteur de couple (61) coopérant avec la suspension (31) maintient la suspension (31) à l'équilibre par un couple agissant contre celui exercé sur l'organe de mesure (33), et détecte de manière opto-électronique la position d'équilibre de l'axe de mesure (41).

3. Viscosimètre rotatif selon l'une des revendications précédentes, caractérisé en ce que le palier radial (66, 67) comprend une bague de palier (72) qui forme le moyen de guidage (73) de la partie la plus mince du bouchon de palier (65) et dont la périphérie s'appuie contre une surface interne conique (74) d'une garniture de bague de palier (75) et est poussée par le ressort (77) contre cette surface interne conique (74).

4. Viscosimètre rotatif selon la revendication 3, caractérisé en ce que la partie la plus épaisse du bouchon de palier (88) est entourée avec du jeu axial et radial par la garniture de bague de palier (75), le jeu déterminant la mesure de la possibilité de coulissement radial de la bague de palier (72) et la mesure de la mobilité axiale de la partie la plus mince du bouchon de palier (65) entourée par la bague de palier (72).

5. Viscosimètre rotatif selon la revendication 3 ou 4, caractérisé en ce que la bague de palier (72) est en saphir, en rubis ou en un autre matériau de dureté comparable.

6. Viscosimètre rotatif selon l'une des revendications 1 à 5, caractérisé en ce que le boîtier (4) du viscosimètre (1) comprend au moins deux cloisons (49, 50), horizontales disposées à un certain intervalle l'une de l'autre et dans lesquelles sont fixés les paliers radiaux (66, 67).

**Claims**

1. A rotary viscosimeter (1) with a measuring beaker (5), a measuring body (33) arranged so that it hangs freely in the measuring beaker (5), the suspension (31) of which body is rotatable around a vertical axis in at least one bearing, a rotary drive (16) connected to the measuring beaker (5) or the measuring body (33), and a device (30) for measuring the torque acting on the suspension with a measuring shaft (41) centred in the said bearing, characterised in that the bearing is constructed as a radial bearing wherein the measuring shaft (41) has a bearing pin with two sections of different diameter, and in that the bearing contains a bearing ring support (75) of a greater diameter than the thicker part of the bearing pin (88), as well as a guiding device (73) displaceable against the force of at least one pre-stressed spring (77) and having the diameter of the thinner part of the bearing pin (65).

2. A rotary viscosimeter according to claim 1, wherein the rotary drive (16) is operatively connected to the measuring beaker (5) and a torque motor (61) operatively connected to the suspension (31) holds the suspension (31), against the torque acting on the measuring body (33), in a position of equilibrium and the position of equilibrium is detected optoelectronically on the measuring shaft (41).

3. A rotary viscosimeter according to one of the preceding claims, wherein the radial bearing (66, 67) provides a bearing ring (72) which forms the guiding device (73) for the thinner part of the bearing pin (65), the circumference of which ring abuts a conical inner face (74) of a bearing ring support (75) and is pressed by the spring (77) against this conical inner face (74).

4. A rotary viscosimeter according to claim 3, wherein the thicker part of the bearing pin (88) is surrounded by the bearing ring support (75) with axial and radial play, which play determines the extent of the radial displaceability of the bearing ring (72) and the extent of the axial movability of the thinner part of the bearing pin (65) surrounded by the bearing ring (72).

5. A rotary viscosimeter according to claim 3 or 4, wherein the bearing ring (72) consists of sapphire, ruby or a comparably hard material.

6. A rotary viscosimeter according to one of claims 1 to 5, wherein the housing (4) of the viscosimeter (1) has at least two horizontal intermediate walls (49, 50) arranged at a distance from each other, in which the radial ball bearings (66, 67) are secured.

FIG. 1

FIG. 2